# EUROPEAN PATENT APPLICATION

(11) **EP 3 733 377 A1**
(43) Date of publication of application: **04.11.2020**
(21) Application number: 20161404.7
(22) Date of filing: 06.03.2020
(51) Int. Cl.: B29C 64/118, B29C 64/295, B33Y 30/00, B33Y 40/20

(54) **MODELING APPARATUS, METHOD, MODELING SYSTEM, AND ANNEALING APPARATUS**

(30) Priority: 19.03.2019 JP 2019051911
(71) Applicant: Ricoh Company, Ltd., Tokyo 143-8555 (JP)
(72) Inventor: TAKAI, Atsushi, Tokyo, 143-8555 (JP); ARAO, Tsuyoshi, Tokyo, 143-8555 (JP); TAKEUCHI, Atsushi, Tokyo, 143-8555 (JP)
(74) Representative: SSM Sandmair

(57) **Abstract**

A modeling apparatus (100) is configured to laminate a modeling material to model a three-dimensional modeled object (MO). The modeling apparatus (100) includes a local heating unit (27), a local cooling unit (29), and an annealing unit (101B). The local heating unit (27) is configured to locally heat the modeling material during lamination of the modeling material is being laminated. The local cooling unit (29) is configured to locally cool the modeling material during the lamination. The annealing unit (101B) is configured to anneal the resultant three-dimensional modeled object at a temperature equal to or higher than a predetermined temperature.

## Description

### BACKGROUND OF THE INVENTION

### 1. Field of the Invention

The present invention relates to a modeling apparatus and method, a modeling system, and an annealing apparatus.

### 2. Description of the Related Art

Recently, modeling apparatuses have come to a wide use, as an apparatus capable of modeling a modeled object without the use of any mold, for example.

For example, when a modeled object is formed using a crystalline resin, the modeled object becomes more susceptible to warping, because, as a result of the modeled object being cooled unevenly in the process of modeling, the modeled object goes through an uneven shrinkage and the internal stress is generated thereby. Japanese Patent No. 6235717 discloses a technology for modeling a modeled object using one or more semi-crystalline polymers, and one or more second materials configured to delay the crystallization of the one or more semi-crystalline polymers.

As a solution for suppressing such warpage, a thin plate, which is referred to as a brim, may be formed around the bottom part of the modeled object. However, depending on the size of the modeled object, it has been difficult to suppress warpage merely with a brim.

The present invention is made in consideration of the above, and an object of the present invention is to obtain a high-quality three-dimensional object with warpage or deformation suppressed, using a simple structure.

### SUMMARY OF THE INVENTION

According to an aspect of the present invention, a modeling apparatus is configured to laminate a modeling material to model a three-dimensional modeled object. The modeling apparatus includes a local heating unit, a local cooling unit, and an annealing unit. The local heating unit is configured to locally heat the modeling material during lamination of the modeling material is being laminated. The local cooling unit is configured to locally cool the modeling material during the lamination. The annealing unit is configured to anneal the resultant three-dimensional modeled object at a temperature equal to or higher than a predetermined temperature.

According to an aspect of the present invention, it is possible to achieve a high-quality three-dimensional modeled object with warpage and deformation suppressed, using a simple structure.

### BRIEF DESCRIPTION OF THE DRAWINGS

FIG. 1 is a block diagram illustrating an overall structure of a modeling apparatus;
FIG. 2 is a schematic front view illustrating an internal structure of a modeling area;
FIG. 3 is a schematic front view illustrating an internal structure of an annealing area;
FIG. 4 is a schematic for explaining a general structure of a modeling head;
FIG. 5 is a block diagram illustrating an overall structure of a driving control system for the modeling head;
FIG. 6 is a block diagram illustrating an overall structure of a control system for the modeling apparatus;
FIG. 7 is a schematic for explaining manufacturing conditions and results of qualitative evaluations of examples and comparative examples;
FIGS. 8A and 8B are schematics for explaining three-dimensional modeled objects used in evaluating strength in an lamination direction;
FIG. 9 is a schematic for explaining quantitative evaluations of the amount of warpage in three-dimensional modeled objects achieved with a fixed laser output;
FIG. 10 is a schematic for explaining evaluation results of breaking stress when tensile tests were carried out with a fixed regulator pressure setting; and
FIG. 11 is a schematic for explaining annealing conditions and evaluation results of tensile elasticities of the resultant three-dimensional modeled objects.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings. A three-dimensional modeling apparatus according to an embodiment will now be explained in detail with reference to the appended drawings. This embodiment is, however, not intended to limit the scope of the present invention in any way.

As one example of the modeling apparatus, fused deposition modeling will now be explained. With fused deposition modeling, a modeling material containing a thermo-plastic resin is heated and melted to a semi-liquid state. This modeling material is then discharged based on a piece of 3D data representing a three-dimensional modeled object that is to be modeled, and a modeling layer is formed thereby. By laminating modeling layers repeatedly, a three-dimensional modeled object can be formed more easily, compared with other methods.

As a modeling material used in such a fused deposition modeling apparatus, it is possible to use a multi-layered modeling material including a hard-to-handle resin, being hard-to-handle when the modeling material is fabricated or stored, or when a three-dimensional modeled object is manufactured, as a core layer, covered by a super engineering plastic, such as polyetheretherketone, serving as a sheath layer.

One embodiment of the present invention will now be explained with reference to the drawings.

### Overall Structure

Explained now is one embodiment of a modeling apparatus that laminates modeling layers on a modeling stage, using a modeling material, and a modeling apparatus for modeling a three-dimensional modeled object using the fused deposition modeling using a filament made of a thermo-plastic resin as a modeling material.

The modeling apparatus is, however, not limited to that using fused deposition modeling using a filament of a thermo-plastic resin, and may be applied to various modeling materials or modeling methods, and it is possible to use any modeling apparatus that models a three-dimensional modeled object on the placement surface of a modeling stage.

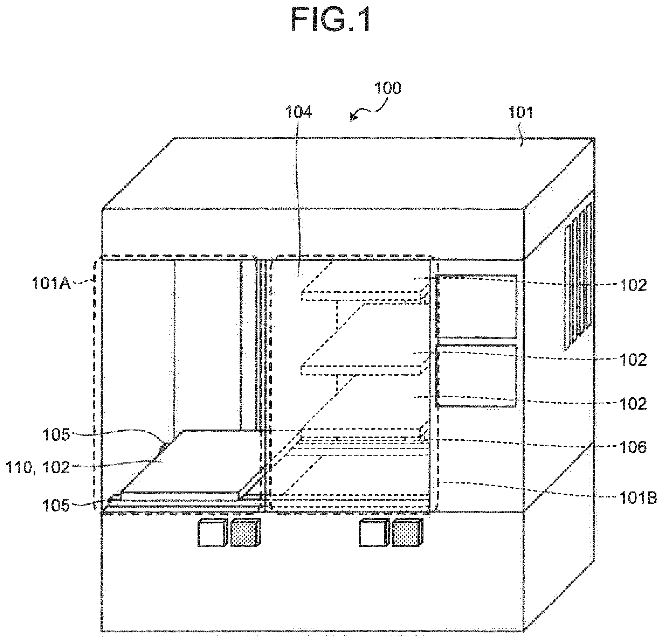

FIG. 1 is a block diagram illustrating an overall structure of the modeling apparatus. This modeling apparatus 100 includes a housing 101, a placement board 102, a shutter 104, a slider 105, an elevator unit 106, a placement board support 110.

The housing 101 has a modeling area 101A as a modeling unit, and an annealing area 101B as an annealing unit. Specifically, the housing 101 is divided into two areas, one of which is a modeling area (modeling chamber) 101A for performing additive manufacturing, and the other of which is an annealing area (annealing chamber) 101B where heat treatment (annealing) is performed on the manufactured three-dimensional modeled object MO at a temperature equal to or higher than a predetermined temperature.

Here, annealing means a treatment for performing heat treatment on the three-dimensional modeled object MO at a temperature equal to or higher than a predetermined temperature to eliminate (remove) distortions caused by a residual stress. When the modeling material has a glass transition temperature, annealing is a heat treatment at a temperature equal to or higher than the glass transition temperature.

The three-dimensional modeled object MO is placed on the placement board 102. The placement board 102 on which the three-dimensional modeled object MO is placed can be moved between the two areas 101A, 101B by a conveying unit 103. The placement board support 110 is integrated with the placement board 102, and supports the placement board 102. The term "conveying unit 103" herein means the motor, the slider 105, and the placement board support 110, collectively. The placement board 102 is conveyed via the placement board support 110.

The slider 105 is disposed in the horizontal direction with respect to the conveying unit 103 so that the placement board 102 can be conveyed between the two areas 101A, 101B.

The annealing area 101B has a space in which a plurality of placement boards 102 can be stacked (housed), and is provided with the elevator unit 106 capable of driving the placement board 102 in vertical directions.

The shutter 104 is a heat-insulating member for adjusting the heat by being opened and closed. The shutter 104 is provided between the two areas 101A, 101B. When the placement board 102 is to be moved, the shutter 104 is opened to ensure the passage, and then the shutter 104 is closed. In this manner, these two areas 101A, 101B are thermally insulated from each other. Therefore, it is possible to maintain the annealing atmosphere in the annealing area 101B.

The modeling apparatus illustrated in FIG. 1 is a modeling apparatus in which the modeling area 101A is integrated with the annealing area 101B, but the modeling area 101A and the annealing area 101B may be separate bodies. Specifically, the modeling apparatus may be implemented as a modeling system including the modeling area 101A as a three-dimensional modeling apparatus, and the annealing area 101B as an annealing apparatus.

The shutter 104 is a heat-insulating member for adjusting the heat by being opened and closed. The shutter 104 is provided between the two areas 101A, 101B. When the placement board 102 is to be moved, the shutter 104 is opened to ensure the passage, and then the shutter 104 is closed. In this manner, these two areas 101A, 101B are thermally insulated from each other. Therefore, it is possible to maintain the annealing atmosphere in the annealing area 101B.

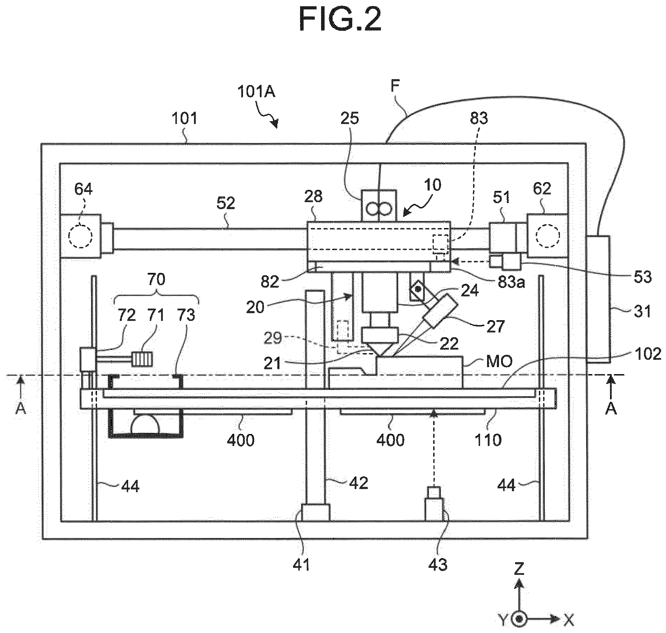

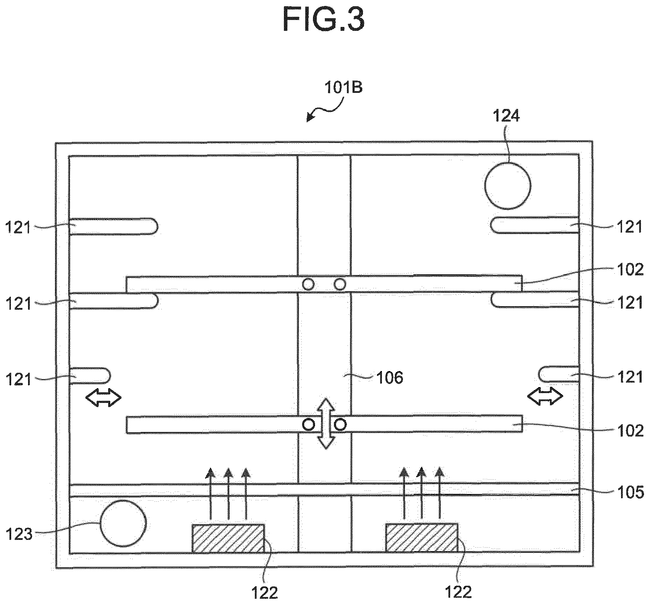

The modeling area 101A and the annealing area 101B illustrated in FIG. 1 will now be explained with reference to FIGS. 2 and 3.

FIG. 2 is a schematic front view illustrating an internal structure of the modeling area. Explanations of the structures assigned with the same reference numerals as those in FIG. 1 will be omitted as appropriate. Explanations will be provided denoting the up-and-down direction in FIG. 2 as a Z-axis direction, denoting the right-to-left direction of the apparatus as an X-axis direction, and denoting the depth direction of the apparatus as a Y-axis direction.

In the modeling area 101A, the placement board support 110 is provided inside of a treatment space of the housing 101, and the three-dimensional modeled object MO is modeled on the placement board 102 supported on the placement board support 110. The modeling area 101A includes the housing 101, the placement board 102, the placement board support 110, an modeling module 10, a modeling head 20, a nozzle 21, a heating block 22, a cooling block 24, an extruder 25, local heaters 27, 29, a reel 31, a supporting member 28, a Z-axis driving motor 41, a Z-axis feed screw 42, a Z-axis coordinate detecting mechanism 43, placement board guide shafts 44, a heating unit 400, an X-axis driving motor 51, an X-axis feed screw 52, an X-axis coordinate detecting mechanism 53, an X-axis guide shaft 54, a Y-axis driving motor 61, a feed screw holding unit 61a, a Y-axis feed screw 62, a Y-axis coordinate detecting mechanism 63, a Y-axis guide shaft 64, a nozzle cleaning unit 70, a brush 71, a brush motor 72, a collection box 73, a rotating table 82, a table rotating motor 83, and a motor gear 83A.

The placement board guide shafts 44 penetrate through the placement board support 110, near the respective ends of the placement board support 110 in the X-axis direction. The Z-axis feed screw 42 penetrates through the placement board 102, near one end of the placement board 102 in Y-axis direction. The placement board support 110 has a female screw on the inner circumferential surface of a through-hole through which the Z-axis feed screw 42 is passed. The Z-axis feed screw 42 is then screwed onto the placement board support 110.

The bottom end of the Z-axis feed screw 42 is connected to the Z-axis driving motor 41 provided on the bottom surface of the housing 101. The Z-axis coordinate detecting mechanism 43 for detecting the position of the placement board 102 on the placement board support 110 in the Z-axis direction is also provided to the bottom surface of the housing 101.

As the Z-axis feed screw 42 is driven in rotation by the driving force of the Z-axis driving motor 41, the placement board support 110 screwed onto the Z-axis feed screw 42 moves in the Z-axis direction, by being guided along the pair of the placement board guide shafts 44, thereby moving the placement board 102 supported on the placement board support 110 in the Z-axis direction. The Z-axis driving motor 41 is controlled based on the detection result of the Z-axis coordinate detecting mechanism 43.

The board heating unit 400 heats the placement board 102. The board heating unit 400 heats a surface of the placement board 102, the surface being a surface where the three-dimensional modeled object MO is placed, to a specified temperature.

By heating the placement board 102 to a specified temperature, cooling of the modeling material layers of the three-dimensional modeled object MO placed on the placement board 102 is suppressed. In this manner, shrinkage due to the cooling of the modeling material layer is suppressed, so that deformation such as warpage of the three-dimensional modeled object MO can be suppressed.

The reel 31 having a winding of a filament F that has a thin and long wire shape, which is one example of the modeling material, is rotatably attached to the outer surface of the housing 101. The wound filament F is taken out of the reel 31 by being drawn and rotated by the extruder 25 that sends out the filament F.

The modeling module 10 is provided, as a discharging unit, above the placement board 102, inside of the modeling area 101A. The modeling module 10 includes the modeling head 20, the rotating table 82 serving as a holding unit, and the supporting member 28.

The modeling head 20 includes the extruder 25 serving as an introducing unit for sending out the filament F, the cooling block 24 serving as a cooling unit that cools the filament F, the heating block 22 that heats and causes the filament F to melt, and the nozzle 21 serving as a pushing unit through which the melted filament F is pushed out.

The modeling head 20 models the three-dimensional modeled object MO by pushing out and discharging the melted filament F through the nozzle 21, thereby laminating layers made of the modeling material one after another on the placement board 102, and by solidifying the laminated layers. A local heater 27 and a local cooler 29 are installed near the nozzle 21. The local heater 27 locally heats the three-dimensional modeled object MO while the three-dimensional modeled object MO is being modeled. The local cooler 29 locally cools the three-dimensional modeled object MO while the three-dimensional modeled object MO is being modeled.

In the modeling module 10, two modeling heads 20 are provided side by side along the Y-axis direction, and these two modeling heads 20 are integrated, except for their nozzles 21.

The rotating table 82 holds the modeling head 20, and the rotating table 82 is mounted rotatably on the supporting member 28.

Among the two modeling heads 20 provided, the nozzle 21 of one of the two modeling heads 20 discharges the melted filament F of the modeling material, with which the three-dimensional modeled object is modeled, and the nozzle 21 of the other modeling head 20 discharges the melted filament F of the support material.

The support material is a modeling-support material that is usually made of a material different from the filament F of the modeling material with which the three-dimensional modeled object is modeled, and is removed from the three-dimensional modeled object upon completion of the three-dimensional modeled object. The melted filament F of the support material discharged from the other nozzle 21 is also laminated in layers one after another, in the same manner as the melted filament F of the modeling material.

The rotating table 82 is provided rotatably on the supporting member 28. The table rotating motor 83 for rotating the rotating table 82 is attached to the supporting member 28. Outer teeth are provided to the outer circumferential surface of the rotating table 82, for example, and are engaged with the motor gear 83A of the table rotating motor 83. With this structure, the driving force from the table rotating motor 83 is transferred to the rotating table 82, and causes the rotating table 82 to rotate.

The X-axis guide shaft 54 and the X-axis feed screw 52 both of which extend in X-axis direction penetrate through the supporting member 28. The supporting member 28 has a female screw on the inner circumferential surface of a through-hole through which the X-axis feed screw 52 is passed. The X-axis feed screw 52 is then screwed onto the supporting member 28.

The Y-axis guide shaft 64 is provided to one end (the left side in the drawing) of the upper part of the housing 101 in the X-axis direction, and the Y-axis feed screw 62 is provided to the other end (the right side in the drawing) of the upper part of the housing in the X-axis direction. A member-to-be-guided 66 is mounted on the Y-axis guide shaft 64, in a movable manner along the Y-axis direction. A moving member 65 is screwed onto the Y-axis feed screw 62.

The member-to-be-guided 66 holds one end of the X-axis guide shaft 54 and one end of the X-axis feed screw 52. The member-to-be-guided 66 holds the X-axis feed screw 52 rotatably. The moving member 65 holds the other end of the X-axis guide shaft 54, the X-axis driving motor 51, and the X-axis coordinate detecting mechanism 53 for detecting the position of the modeling module 10 in the X-axis direction. The other end of the X-axis feed screw 52 is connected to the X-axis driving motor 51. With this structure, the Y-axis feed screw 62 and the Y-axis guide shaft 64 hold the supporting member 28, supporting elements such as the modeling head 20 in a manner suspended on the X-axis guide shaft 54 and the X-axis feed screw 52.

One end of the Y-axis feed screw 62 is rotatably supported by the feed screw holding unit 61a, and the other end is connected to the Y-axis driving motor 61 provided on a side surface of the housing 101. On the feed screw holding unit 61a, the Y-axis coordinate detecting mechanism 63 for detecting the position of the modeling module 10 in the Y-axis direction is mounted.

As the Y-axis feed screw 62 is driven in rotation by the Y-axis driving motor 61, the Y-axis feed screw 62 screwed on the moving member 65 is moved in the Y-axis direction. With this movement, the modeling module 10 held on the moving member 65 via the X-axis guide shaft 54 and the X-axis feed screw 52 is moved in the Y-axis direction, by being guided along the Y-axis guide shaft 64. The Y-axis driving motor 61 is controlled based on the detection result of the Y-axis coordinate detecting mechanism 63.

When the X-axis feed screw 52 is driven in rotation by receiving the driving force of the X-axis driving motor 51, the modeling module 10 is moved in the X-axis direction, together with the supporting member 28 screwed onto the X-axis feed screw 52, by being guided by the X-axis guide shaft 54. The X-axis driving motor 51 is controlled based on the detection result of the X-axis coordinate detecting mechanism 53.

The nozzle cleaning unit 70 for cleaning the nozzle 21 of the modeling head 20 is provided inside of the housing 101. When the melted filament F is kept being discharged continuously, the filament may become accumulated around the nozzle 21, due to the melted filament dripping or residual filament attached to the nozzle 21, and proper discharging operations may be obstructed thereby. Therefore, the nozzle needs to be cleaned regularly.

The nozzle cleaning unit 70 is provided on one end of the placement board 102 in the X-axis direction, and mainly includes the brush 71 for removing foreign substances such as the residual filament from the nozzle 21, the brush motor 72 for rotating the brush 71, and the collection box 73 in which the foreign substance removed by the brush 71 is collected.

The nozzle 21 is cleaned in the manner described below. To begin with, the placement board 102 placed on the placement board support 110 and the modeling module 10 are moved so that the nozzle 21 is brought into contact with the brush 71. The foreign substances such as the residual filament attached on the nozzle 21 are then removed by causing the brush motor 72 to rotate the brush 71.

It is preferable to perform cleaning before the temperature of residual filament attached on the nozzle 21 drops completely, from the viewpoint of adhesion. It is also preferable to use a heat-resistant resin as the brush 71.

The foreign substances removed from the nozzle 21 fall into the collection box 73, and collected into the collection box 73. The collection box 73 is provided removably from the placement board support 110, and the foreign substances housed in the collection box 73 removed from the placement board support 110 are regularly discarded by a worker. Although the collection box 73 is provided inside of the housing 101 in this modeling area 101A, it is also possible for the collection box 73 to be provided outside of the housing 101, and for the foreign substances removed from the nozzle 21 by the brush 71 to be conveyed into the collection box 73 provided outside of the housing 101, using a suction device or the like.

FIG. 3 is a schematic front view illustrating an internal structure of the annealing area. Explanations of structures assigned with the same reference numerals as those in FIGS. 1 and 2 will be omitted as appropriate. The annealing area 101B includes the placement board 102, the slider 105, the elevator unit 106, rods 121, a heated-air unit 122, an air intake port 123, and an exhaust port 124.

The placement board support 110 with the placement board 102 placed thereon is conveyed from the modeling area 101A into the annealing area 101B via the slider 105.

In the annealing area 101B, the elevator unit 106 becoming engaged with the placement board 102 and sliding the placement board 102 upwards is provided so that a plurality of the placement boards 102 are stored.

The rods 121 that are extendable and contractible are provided on both sides of the apparatus so that the placement boards 102 can be stored in the annealing area 101B sequentially from the highest level. When the placement board 102 is elevated by the elevator unit 106 to a Z coordinate at which the placement board 102 is able to be stored, the rods 121 are extended, and the placement board 102 is placed on the rods 121.

An annealing mechanism will now be explained.

The heated-air unit 122 that is a heat source air source is provided. In the annealing area 101B, the heated-air unit 122 serving as a heat source as well as a blower air source is disposed. The heated-air unit 122 is provided as a cartridge, and a predetermined number of the cartridges (only two are illustrated in FIG. 3) are disposed on the bottom of the apparatus. In this configuration, it is preferable to give a consideration to positioning of the heated-air units 122 in such a manner that the heated air does not strike the modeled objects directly.

The air intake port 123 and the exhaust port 124 are also disposed, as a slow-cooling mechanism. In this configuration, too, it is preferable to determine how these ports are disposed, through airflow designing, in such a manner that the cooling air does not strike the modeled objects directly, in the same manner as the heated-air unit 122.

Crystallization of a modeled object is promoted by designing the airflow through annealing area 101B, the air intake port 123, and the exhaust port 124, and performing control variably in such a manner that the modeled object can go through a temperature change sufficiently gradually. In addition, to detect the temperature inside of the chamber, a temperature sensor (thermocouple) is provided at a plurality of locations, and the amount of air to be supplied by the heated-air unit 122 and the air intake port 123, and the amount of air to be exhausted from the exhaust port 124 are controlled based on the detection results.

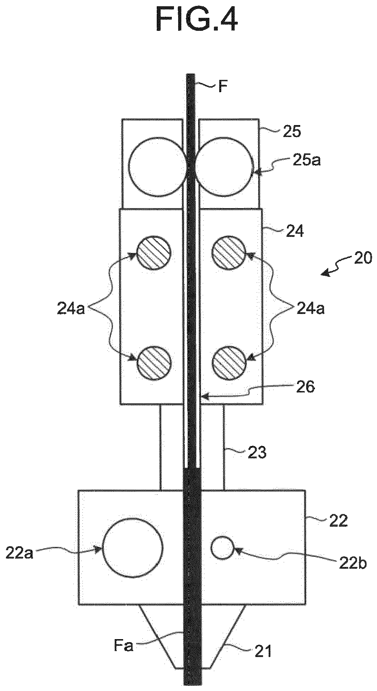

The modeling head 20 inside of the modeling area 101A will now be explained. FIG. 4 is a schematic for explaining a general structure of a modeling head. Explanations of structures assigned with the same reference numerals as those in FIG. 2 will be omitted as appropriate.

The modeling head 20 includes the extruder 25 that sends out the filament F toward the nozzle 21, the cooling block 24 that cools the filament F, the heating block 22 that heats and causes the filament F to melt, and the nozzle 21 that discharges the melted filament F. A guide block 23 for guiding the filament F having passed through the cooling block 24 to the heating block 22 is disposed between the cooling block 24 and the heating block 22. A transfer channel 26 for transferring the filament F sent out of the extruder 25 into the nozzle 21 is provided inside of the heating block 22, the guide block 23, the cooling block 24.

The heating block 22 includes a heat source (heater) 22a that functions as a heating unit for heating the filament F, and a thermocouple 22b serving as a temperature detecting unit that detects the temperature of the filament F heated by the heat source 22a.

The thermocouple 22b is positioned on the opposite side of where the heat source 22a is disposed, with the transfer channel 26 through which the filament F is transferred interposed therebetween. The heating block 22 heats and causes the filament F in the transfer channel 26 to melt. The melted filament Fa is then transferred to the nozzle 21.

It is unfavorable for the heat from the heating block 22 to propagate to the filament F upstream in the transfer channel 26 and to cause the filament F to melt, in addition to the filament F inside of the transfer channel 26.

Specifically, when the heating block 22 stops heating, or when the heating operation thereof is interrupted, the melted filament F in the transfer channel 26 solidifies in the transfer channel 26. When the heating by the heating block 22 is then restarted, the filament F having a history of having melted and solidified in the transfer channel 26 quickly becomes melted again.

If the filament F has melted and solidified on the upstream side of the transfer channel 26 in the transfer direction, however, it takes some time for this part of the filament F to become melted again when the heating is restarted.

As a result, the filament F becomes clogged, without being transferred into the nozzle 21.

Hence, it is desirable to suppress such clogging of the filament F by preventing the heat of the heating block 22 from being propagated to the upstream filament F in the transfer channel 26 in the transfer direction, as much as possible.

To address this point, the cooling block 24 is provided on the upstream side of the transfer channel 26 of the heating block 22, in the transfer direction.

The cooling block 24 is made of a highly thermally conductive material, such as aluminum, and a channel 24a through which coolant flows is provided around the transfer channel 26 in the cooling block 24. The cooling block 24 cools the filament F by allowing the heat of the filament F in the transfer channel 26 to transfer to the coolant flowing through the channel 24a.

As a result, the filament F in the upstream section of the transfer channel 26 in the heating block 22 in the transfer direction is prevented from melting by the heat propagated from the heating block 22.

The guide block 23 disposed between the heating block 22 and the cooling block 24 is made of a heat-insulating material, and suppresses propagation of the heat from the heating block 22 to the filament on the upstream side in the transfer direction. The guide block 23 further suppresses melting of the filament F in the upstream section in the transfer direction of the transfer channel 26 in the heating block 22 by the heat propagated from the heating block 22. In addition, by suppressing the propagation of the heat from the heating block 22 to a section of the filament F other than the section in the transfer channel 26, the filament F in the transfer channel 26 can be heated efficiently.

A pair of feeder rollers 25a are provided to the extruder 25, and feed the filament F into the transfer channel 26. The melted filament Fa having been heated in the heating block 22 and become melted is discharged from the nozzle 21, by receiving the feeding force of the extruder 25.

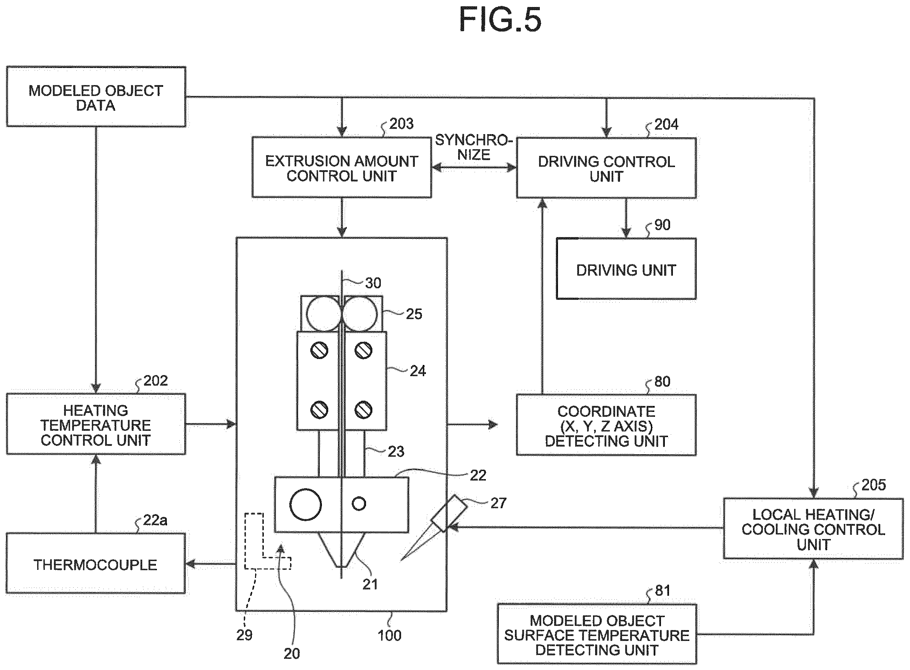

FIG. 5 is a block diagram illustrating an overall structure of a driving control system for the modeling head. As driving control of the modeling head 20, at least a heating temperature control unit 202, an extrusion amount control unit 203, a driving control unit 204, a local heating/cooling control unit 205, a coordinate detecting unit 80, a driving unit 90, a modeled object surface temperature detecting unit 81, and the driving unit 90 are provided.

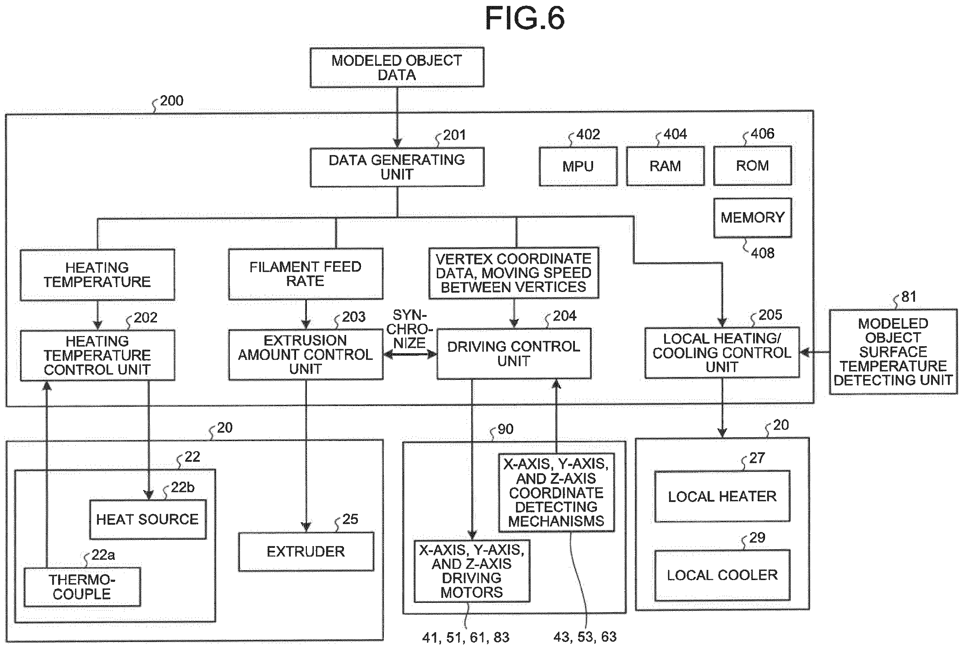

FIG. 6 is a block diagram illustrating an overall structure of a control system for the modeling apparatus. As a control device 200 for the modeling apparatus 100, at least a data generating unit 201, the heating temperature control unit 202, the extrusion amount control unit 203, the driving control unit 204, the local heating/cooling control unit 205, the coordinate detecting unit 80, the driving unit 90, the modeled object surface temperature detecting unit 81, and the driving unit 90, a micro-processing unit (MPU) 402, a random access memory (RAM) 404, a read-only memory (ROM) 406, and a non-volatile memory 408 are provided. The structures assigned with the same reference numerals in FIGS. 5 and 6 are common elements, so these elements will now be explained with reference to FIGS. 5 and 6.

The control device 200 functioning as a control unit is configured as what is called a micro-computer, and includes the MPU 402 functioning as a processing unit, the RAM 404, the ROM 406, and the non-volatile memory 408 functioning as a data storage unit. The control device 200 then performs various operations and executes control programs.

The driving unit 90 includes the X-axis, Y-axis, and Z-axis driving motors 41, 51, 61, the table rotating motor 83, and the X-axis, Y-axis, and Z-axis coordinate detecting mechanisms 43, 53, 63.

The data generating unit 201 generates data that is broken up into multiple layers in the up-and-down direction (slice data for modeling a modeled object) based on modeled object data received from an external device such as a personal computer that is data-communicatively connected to the modeling apparatus 100 over the wire or wirelessly.

The slice data corresponding to each layer corresponds to a layer formed with the filament F discharged from the modeling head 20, and the thickness of each layer is set as appropriate, depending on the capacity of the modeling apparatus 100. It is also possible to configure an external device to generate slice data, and to input the slice data to the modeling apparatus 100.

The slice data is described as G-code text data having an extension ".gcode", for example.

The text data with an extension ".gcode" basically includes descriptions of the following three types of data, excluding a preparation operation and an ending operation of the main unit:
(1) data specifying the coordinates of the vertices of the modeled object;
(2) data specifying the speed at which the nozzle 21 of the modeling head 20 is moved to each vertex of the modeled object; and
(3) data specifying the rate at which the filament F is fed.

In this example, the data specifying the filament feed rate includes data related to the timing to start feeding, and timing to stop feeding.

The data generating unit 201 also generates data of heating temperature, for example, in addition to the slice data.

The data generating unit 201 transmits the data specifying the heating temperature to the heating temperature control unit 202.

As a result of this, the heating temperature control unit 202 feedback-controls the heat source 22a of the heating block 22 based on the temperature detection result of the thermocouple 22b so that the heating temperature is adjusted to the specified heating temperature received from the data generating unit 201.

In order to ensure the temperature stability of the nozzle 21 in the modeling head 20, it is preferable for the heating temperature control unit 202 to start its operation before the filament feeding operation is started, so that the heating block 22 has been heated to the specified heating temperature before the filament feed operation is started. Specifically, it is preferable to predict the timing at which the filament feed operation is to be started based on data for causing feeding of the filament F to be started and the data representing the vertices of the modeled object, and to perform feed-forward control to control the heat source 22a. It is also possible to use a feedback operation to start a modeling operation when the thermocouple 22b detects that the temperature has reached the specified heating temperature.

The filament feed rate data generated by the data generating unit 201 is sent to the extrusion amount control unit 203. In response, the extrusion amount control unit 203 controls the extruder 25 so that the filament feed rate is adjusted to the filament feed rate received from the data generating unit 201.

Before stopping discharging the filament F from the nozzle 21 (before stopping driving the extruder 25), the extrusion amount control unit 203 drives the extruder 25 to be rotated reversely to perform an operation for drawing the filament F back into the nozzle 21. By performing such a sucking operation, it is possible to suppress dripping of the filament F from the nozzle 21, and to improve the precision of the shape of the three-dimensional modeled object MO.

The data specifying the coordinate of the vertices of the modeled object and the speed data specifying the speed for moving the nozzle 21 of the modeling head 20 to each of the modeled object vertices, generated by the data generating unit 201, are also sent to the driving control unit 204. In response, the driving control unit 204 controls the motors 41, 51, 61, 83 based on these pieces of data. The driving control unit 204 also performs feedback control for moving the nozzle 21 to the target coordinate point based on the detection result of the coordinate detecting mechanisms 43, 53, 63, so as not to result in an improper operation.

The extrusion amount control unit 203 is synchronized with the driving control unit 204, and the amount of the filament F to be extruded (feed rate) and starting/stopping of feeding of the filament F are controlled in accordance with the operation of the modeling head 20.

A surface treatment control unit 205 is also synchronized with the driving control unit 204, and controls the local heater 27 that locally heats the three-dimensional modeled object MO, and the local cooler 29 that locally cools the three-dimensional modeled object MO in accordance with the movement of the modeling head 20, while the three-dimensional modeled object MO is being modeled, the local heater 27 and the local cooler 29 being provided internal of the modeling head 20.

In other words, the surface treatment control unit 205 suppresses a huge volume change of the modeling material by suppressing crystallization of the melted crystalline material, and allowing the material to amorphize (to go through glass transition), by controlling the local heater 27 locally heating the three-dimensional modeled object MO while the three-dimensional modeled object MO is being modeled.

An example of a possible specific structure of the local heater 27 includes a device irradiating a position to be heated with a laser beam, using a laser diode (LD).

The surface treatment control unit 205 can alleviate the residual stress generated while the layers are being laminated, by controlling the local cooler 29 for locally cooling the three-dimensional modeled object MO while the three-dimensional modeled object MO is being modeled, and by cooling the modeling material quickly after the modeling material is discharged.

As an example of a specific structure of the local cooler 29, it is possible to use a device that sprays compressed air toward a position to be cooled, via an air nozzle.

However, if the three-dimensional modeled object MO is kept in an amorphous state, properties inherent to crystalline materials cannot be achieved. Therefore, in this embodiment, the three-dimensional modeled object MO having been modeled is transferred to and annealed in the annealing area 101B, so that the three-dimensional modeled object MO is crystallized and the properties inherent to crystalline materials (such as mechanical characteristics and chemical resistance thereof) are achieved.

An operation according to the embodiment will now be explained.

When a modeling operation is started in response to an instructing operation performed by a user, to begin with, the control unit 200 starts conducting current to the heat source 22a of the heating block 22, and heats the heating block 22 to a heating temperature based on modeled object data generated by the data generating unit 201.

The Z-axis driving motor 41 is controlled by the driving control unit 204 to elevate the placement board support 110 supporting the placement board 102 to a modeling position, from a predetermined standby position (e.g., the lowest level).

Upon detecting that the placement board 102 has reached the modeling position, the Z-axis coordinate detecting mechanism 43 stops the Z-axis driving motor 41, and the control is shifted to a modeling process.

In the modeling process, to begin with, a modeling material layer corresponding to the bottom layer is created on the surface of the placement board 102, based on the slice data of the bottom layer (first layer). Specifically, the X-axis driving motor 51 and the Y-axis driving motor 61 are controlled by the driving control unit 204 based on the slice data of the bottom layer (first layer), and detection results of the X-axis coordinate detecting mechanism 53 and the Y-axis coordinate detecting mechanism 63. As a result, the tip of the nozzle 21 in the modeling head 20 is moved sequentially to target positions (target positions on the X-Y plane).

In synchronization with the driving control of the driving control unit 204, the extruder 25 is controlled by the extrusion amount control unit 203 so that the filament F is fed via the nozzle 21 based on the slice data. As a result, as the tip of the nozzle 21 of the modeling head 20 is moved sequentially to the target positions, the filament is discharged from the nozzle 21, and a modeling material layer is formed on the placement board 102 in accordance with the slice data of the bottom layer (first layer). The support material, which does not constitute the three-dimensional modeled object, may be created at the same time.

In synchronization with the driving control of the driving control unit 204, the surface treatment control unit 205 also control the local heater 27 for locally heating the three-dimensional modeled object MO, and to control the local cooler 29 for locally cooling the three-dimensional modeled object MO, to suppress crystallization and to alleviate the residual stress in laminating.

Upon completion of the process of modeling the bottom layer in accordance with the slice data of the bottom layer (first layer) (unit layer modeling process), the driving control unit 204 controls the Z-axis driving motor 41 based on the detection result of the Z-axis coordinate detecting mechanism 43, and descends the placement board 102 by a distance corresponding to the one layer of the modeling material layers.

The X-axis driving motor 51 and the Y-axis driving motor 61 are then controlled by the driving control unit 204 based on the slice data of the second layer, so that the tip of the nozzle 21 of the modeling head 20 is moved sequentially to the target positions. At the same time, the extruder 25 is controlled by the extrusion amount control unit 203 so that the filament F is fed via the nozzle 21. As a result, a second layer is formed, in accordance with the slice data, on top of the bottom layer having been formed on the placement board 102.

Once modeling of the layers is completed, the surface temperature is obtained, using a modeled object surface temperature detecting unit 81 such as a thermal camera or a thermography. As a result, even when a modeled object is a piece having an intended thickness deviation, it is possible to recognize the temperature deviation of the modeled object at the time of measurement. Furthermore, by feeding this information back to the local heating/cooling control unit 205, it is possible to control the heating and cooling initially planned to be output, in such a manner that the outputs can be maintained at an appropriate level.

If a temperature deviation is resultant of a thickness deviation, as mentioned above, feedforward control can be performed based on the modeled object data entered by a user. However, because the modeling apparatus 100 according to the embodiment does not have any means for controlling the ambient temperature, such as that inside the chamber, it is necessary to consider the ambient temperature/humidity as an error factor.

Therefore, it is preferable to perform the feedback control using the modeled object surface temperature detecting unit 81 at the same time, in order to ensure a stable quality.

In the manner described above, by repeating the operation of laminating the layers of the modeling material, sequentially from the bottom layer, while controlling the Z-axis driving motor 41 to descend the placement board support 110, thereby causing the placement board 102 be lowered sequentially, the three-dimensional modeled object MO is modeled on the placement board 102, in accordance with the three-dimensional modeled object data.

When modeling of the three-dimensional modeled object MO is completed, the Z-axis driving motor 41 is controlled to descend the placement board support 110 and the placement board 102 to the standby position.

When a shutter 103 is then opened, the placement board support 110 on which the placement board 102 is placed is conveyed from the modeling area 101A into the annealing area 101B via the slider 105.

Once the placement board support 110 on which the placement board 102 is placed is conveyed into the annealing area 101B, the placement board 102 becomes engaged with the elevator unit 106, and the elevator unit 106 conveys the placement board 102 upwards by sliding.

The placement board support 110 is then returned to the modeling area 101A via the slider 105, and the shutter 103 is closed.

When the elevator unit 106 elevates the placement board 102 to a Z coordinate where there is an available storage space, the rods 121 are extended, and the placement board 102 is placed on top of the rods 121, and annealed for predetermined time so that the crystallization of the three-dimensional modeled object MO is promoted.

As a result, according to the embodiment, even when a crystalline or semi-crystalline material is used as the modeling material of the three-dimensional modeled object MO, the three-dimensional modeled object MO can be brought to the state inherent to the modeling material (crystalized or semi-crystalized state). Therefore, a high mechanical strength and chemical resistance can be ensured.

Explained above is an example of the modeling apparatus 100 having a modeling area (modeling chamber) and an annealing area (annealing chamber), but it is also possible to use a modeling system in which a modeling apparatus having a modeling area is connected to an annealing apparatus having an annealing area (annealing chamber) via a conveyor apparatus having a heat-insulating mechanism, and in which the three-dimensional modeled object MO having been modeled in the modeling apparatus is conveyed into the annealing apparatus via the conveyor apparatus, in a manner insulated from the heat, and then annealed in the annealing apparatus. Even when the conveyor apparatus does not have any heat-insulating mechanism, as long as the conveyor apparatus is capable of transferring the three-dimensional modeled object MO before the temperature goes out of a predetermined temperature range, such a structure is also usable, likewise.

Explained above is an example of the fused deposition modeling, but even with another three-dimensional modeling method, it is possible to achieve a three-dimensional modeled object exhibiting even higher performance, with the internal stress reduced.

### Examples

More specific examples will now be explained.

Modeling conditions inside of the modeling area 101A and evaluations of samples of the modeled three-dimensional modeled object MO will now be explained.

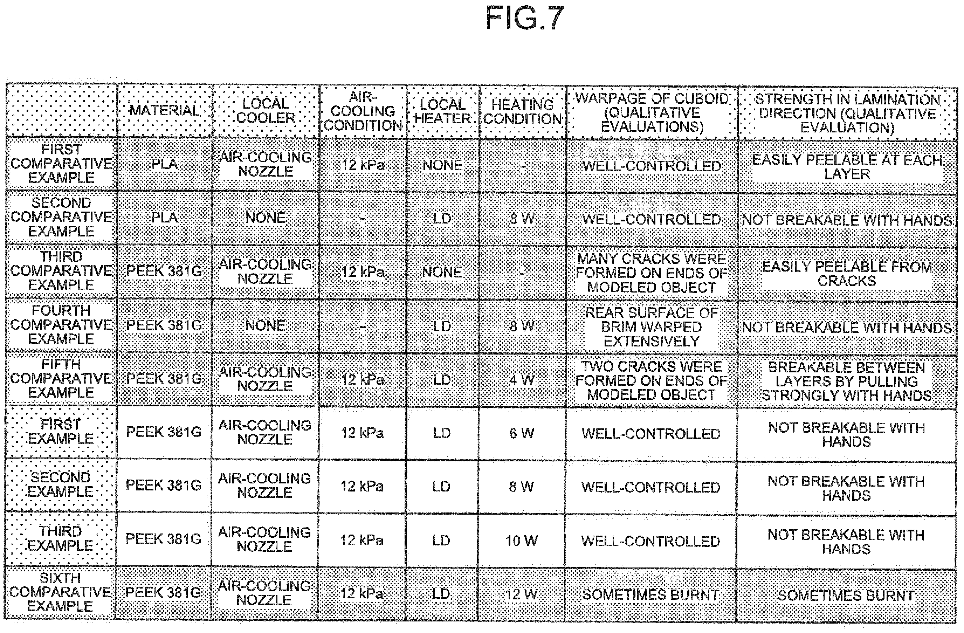

FIG. 7 is a schematic for explaining modeling conditions and results of qualitative evaluations of the examples and some comparative examples. As an evaluation of warpage, the warpage and the lamination strength were evaluated for each example.

### Modeling Apparatus

The modeling apparatus having performed the manufacture according to the examples and the comparative examples has a structure illustrated in FIGS. 2, 4, 5, and 6, with additional structures described below.

As the extruder 25, two rollers having a diameter of 12 [mm] and manufactured by SUS304 were used side by side.

As the nozzle 21, a nozzle made of brass and having an opening with a size of 0.5 [mm] at the tip was used.

As the filament passage in the modeling head 20, a passage having a diameter of 2.5 [mm] was used. The diameter of the transfer channel 26 in the heating block 22 was also set to 2.5 [mm].

### Modeling Material

In the examples and the comparative examples, as the modeling material, either PLA (polylactic acid manufactured by Polymaker, under the product name PolyLite PLA, model number: PolyLite PLA11-natural) or PEEK (polyetherketone manufactured by Victrex, with a model number 381G, and ISO11357 compliant glass transition temperature of 143 degrees Celsius) was used. As the modeling material, a filament having a diameter of φ1.75 was used.

### Temperature Condition

As the cooling block 24, a cooling block manufactured by SUS304 and having a conduit pipe was used, and the cooling water circulation device was connected to the conduit pipe. The temperature setting of the cooling water circulation device was set to 10 [°C]. As the heating block 22, a heat block having the same structure as the cooling block 24 was used, and a fluid circulation device was connected to the conduit pipe. A cartridge heater was then disposed inside of the conduit pipe of the heating block 22, and power supply to the cartridge heater was controlled in such a manner that the cartridge heater was turned ON/OFF based on the detection result of the thermocouple 22b.

The temperature setting of the cartridge heater was configured to 200 [°C] when PLA was used as the modeling material, and set to 400 [°C] when PEEK was used as the modeling material.

In all of these tests, the modeling speed was set to 20 mm/sec.

### Cooling Condition

In the examples and the comparative examples, experiments were carried out with and without cooling by the local cooler 29, and the results were compared. In the experiments with the cooling, 12 kPa was used as a cooling condition. As the local cooler 29, a precision regulator (cooling nozzle) installed in a piping route was used.

### Heating Condition

In the examples and the comparative examples, experiments were carried out with and without the heating by the local heater 27, and the results were compared. The heating condition was set to 4 W to 12 W, and this condition was changed for each of the experimental examples and the comparative examples. As the local heater 27, a semiconductor laser (LD) was used. The wavelength of the LD was set to 780 nm.

The examples and the comparative examples were then evaluated qualitatively, in views of warpage of a cuboid, and the strength in the lamination direction.

### Three-Dimensional Modeled object MO and Evaluation Method used in Qualitative Evaluations of Warpage of Cuboid

As a three-dimensional modeled object MO used in the qualitative evaluation of warpage in a cuboid, a cuboid-shaped modeled object having a size of W30×D30×H7.5 (mm) was used. While the amount of warpage can be measured with a height gauge as long as the warpage is in the order of a few millimeters or so, but it is also possible to use a contactless 3D scanner or the like and to obtain a cross-sectional profile of the modeled object. When a 3D scanner is to be used, the amount of warpage can be measured easily by calculating a difference with respect to the modeled object data entered by a user.

### Three-Dimensional Modeled object MO and Evaluation Method Used in Qualitative Evaluations of Strength in Lamination Direction

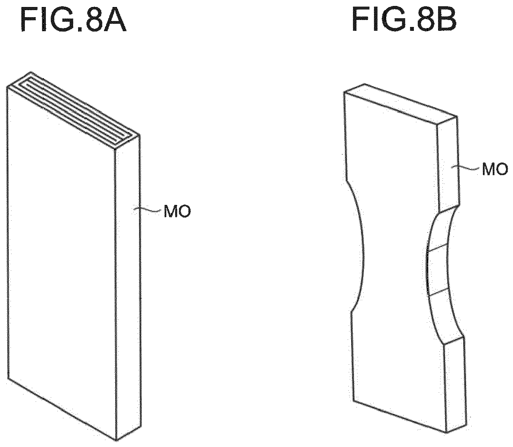

FIGS. 8A and 8B are schematics for explaining three-dimensional modeled objects used in evaluating the strength in the lamination direction.

From the viewpoint of modeling a three-dimensional modeled object, a cuboid modeled object, such as that illustrated in FIG. 8A, is easy to manufacture. However, as a standard for tensile tests, it is preferable for the modeled object to have a dumbbell shape, as illustrated in FIG. 8B.

When a dumbbell shape is to be modeled in the lamination direction, the part above the constricted portion has an overhanging shape, so this part generally requires a support region.

Therefore, to avoid formation of very small notches on the surficial shape as much as possible when the support region was removed, the inventors of the present invention obtained a three-dimensional modeled object MO that is a sample having the dumbbell shape illustrated in FIG. 8B, by modeling the cuboidal three-dimensional modeled object MO illustrated in FIG. 8A, and then cutting the modeled object into the cuboidal three-dimensional modeled object MO, and used the resultant three-dimensional modeled object MO in the evaluation of the strength in the lamination direction. The evaluation of the strength in the lamination direction was carried out using the method compliant to ASTM-D638.

### First Comparative Example/Second Comparative Example

In a first comparative example and a second comparative example, PLA was used.

In the first comparative example, only the local cooler 29 was used, among the local heater 27 and the local cooler 29.

In the second comparative example, only the local heater 27 was used, among the local heater 27 and the local cooler 29. The heating condition was set to 8 W.

Third Comparative Example/Fourth Comparative Example/Fifth Comparative Example/Sixth Comparative Example

In a third to a sixth comparative examples, PEEK was used.

In the third comparative example, only the local cooler 29 was used, among the local heater 27 and the local cooler 29.

In the fourth comparative example, only the local heater 27 was used, among the local heater 27 and the local cooler 29. The heating condition was set to 8 W.

In the fifth comparative example and the sixth comparative example, the local heater 27 and the local cooler 29 were both used. In the fifth comparative example and the sixth comparative example, different heating conditions were used for the local heater 27. In the fifth comparative example, the heating condition was set to 4 W. In the sixth comparative example, the heating condition was set to 12 W.

### First Example/Second Example/Third Example

In a first to a third examples, PEEK (polyetheretherketone) was used, in the same manner as in the third to the sixth comparative examples, and the local heater 27 and the local cooler 29 were both used. In the first to the third examples, different heating conditions were used for the local heater 27. In the first example, the heating condition was set to 6 W. In the second example, the heating condition was set to 8 W. In the third example, the heating condition was set to 10 W.

Results of Qualitative Evaluations of Warpage of Cuboid and Results of Qualitative Evaluations of Strength in Lamination Direction

Evaluation results of the comparative examples and the examples will now be explained.

### First Comparative Example/Second Comparative Example

In both of the first and the second comparative examples, warpage was well-controlled.

However, in the first comparative example in which only the local cooler 29 was used, a desirable level of interfacial strength in the lamination direction was not achieved, and the strength remained at a level where the sample could be easily destroyed with hands. Therefore, a high lamination strength was not achieved.

### Third Comparative Example

In the third comparative example, the modeled object warped extensively.

Not only the warpage was extensive, many cracks were found on the ends of the modeled object. In addition, an interfacial peeling phenomena, in which the layers peel off from one another along the cracks, were observed along the interface between the layers. It can be said that heating by the local heater 27 was required.

### Fourth Comparative Example

In the fourth comparative example, the samples exhibited a high lamination strength but warped extensively, with the surface of the brim warping highly extensively. It can be said that cooling by the local cooler 29 was required.

### Fifth Comparative Example

In the fifth comparative example, the sample warped extensively. Not only the sample warped extensively, two cracks were found on the ends of the modeled object. In addition, the interfacial peeling phenomena, in which the layers peel off from one another along the cracks, were observed along the interface between the layers. Therefore, it can be said that the heating by the local heater 27 was not strong enough.

### First Example, Second Example, Third Example

In the first to the third examples, not only the warpage was well-controlled, but also the samples exhibited a high strength in the lamination direction.

### Sixth Comparative Example

In the sixth comparative example, the sample was burnt, and neither the warpage was well-controlled, nor the sample exhibited a high strength in the lamination direction. It can be said that the heating by the local heater 27 was too strong.

As explained above, in the first to the third examples, conditions achieving a well-balanced combination of the warpage and the lamination strength were found within the range of 6 W to 10 W as the output settings of the LD that is the local heater 27. It can be concluded that, when the cooling is relatively stronger, the lamination strength is not ensured, and when the cooling is weaker, conversely, a deterioration such as burning is promoted. Therefore, in the example illustrated in FIG. 7, when the heating condition of the local heater 27 was set equal to or higher than 6 W and equal to and lower than 10 W and the cooling condition of the local cooler 29 was set to 12 kPa, a modeled object with satisfactory levels of warpage and lamination strength was obtained, successfully.

However, these examples are provided by way of examples only, and it should be clear that the appropriate heating and cooling conditions vary, depending on the thermal capacity of the modeled object and the feed rate. Furthermore, when the modeled object has a complex shape, it is preferable to perform feedback-control of the means for heating and for cooling, using a surficial temperature profile obtained using a thermal camera, instead of using a fixed output, as did in these examples.

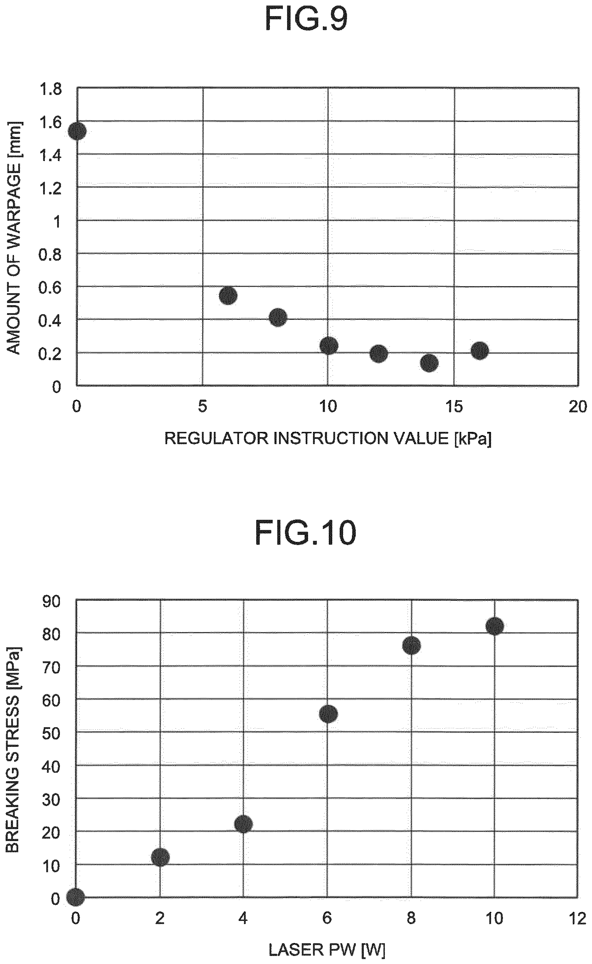

FIG. 9 is a schematic for explaining quantitative evaluations of the amount of warpage in three-dimensional modeled objects achieved with a fixed laser output.

In FIG. 9, evaluations were carried out with the LD output fixed to 6 W, as the heating condition of the local heater 27.

In the evaluations, PEEK 381G was used as the modeling material, and, as the same other conditions, such as the modeling apparatus and the temperature condition, were used as those explained with FIG. 7. No measurement was collected with a cooling condition of 20 kPa, because it was highly likely for the sample to break. The measurements were collected under the cooling conditions of 0, 6, 8, 10, 12, 14, and 16 kPa, respectively.

In the same manner as in the comparative example illustrated in FIG. 7, when there was no cooling by the local cooler 29 (with the cooling condition of 0 kPa), the sample exhibited the largest amount of warpage. The obtained results were very different depending on the air-cooling condition of the local cooler 29, and this evaluation indicated that the warpage was reduced when the cooling condition is equal to or more than 10 kPa. Specifically, a range equal to or higher than 10 kPa and lower than 20 kPa is preferable, and a range equal to or higher than 10 kPa and equal to and lower than 16 kPa is more preferable.

It has been also confirmed that the actually modeled three-dimensional modeled object MO had an opaque color, indicating that the modeled object went through a glass transition.

FIG. 10 is a schematic for explaining evaluation results of breaking stress when tensile tests were carried out with a regulator pressure setting fixed.

In the example illustrated in FIG. 10, the regulator pressure setting is fixed to 10 kPa, as a cooling condition of the local cooler 29.

In this evaluation, PEEK 381G was used as the modeling material, and the same other conditions, such as the modeling apparatus and the temperature conditions, as those explained with reference to FIG. 7, were used.

Without the heating by the local heater 27 (with a heating condition of 0 W), the breaking stress was 0 W.

As illustrated in FIG. 10, it was confirmed that, as the output of the LD serving as the local heater 27 (laser PW) was increased, the breaking strength improved further. In other words, when the heating condition by the local heater 27 was changed from 2 W to 10 W, the breaking strength improved.

An experiment was also carried out by setting the heating condition of the local heater 27 to LD output = 12 W, but this result was excluded from the evaluation, because the three-dimensional modeled object MO was burnt. Based on the above, from the viewpoint of the breaking strength, it is preferable for the heating condition by the local heater 27 to be set to a level greater than 0 W and equal to or lower than the 12 W, and it is more preferable to be set to a level equal to or higher than 2 W and equal to or lower than 10 W. Furthermore, it is preferable for the cooling condition to be set to 10 kPa, and for the heating condition by the local heater 27 to be set to a level greater than 0 W and equal to or lower than 12 W, and it is more preferable be set to a level equal to or higher than 2 W and equal to or lower than 10 W.

As illustrated in FIGS. 9 and 10, the effects achieved by cooling and heating are in the trade-off relation, but it is possible to find a condition in which both of a warpage reduction and a high lamination strength are achieved.

Annealing conditions in the annealing area 101B, and evaluations of the resultant samples of the three-dimensional modeled object MO will now be explained.

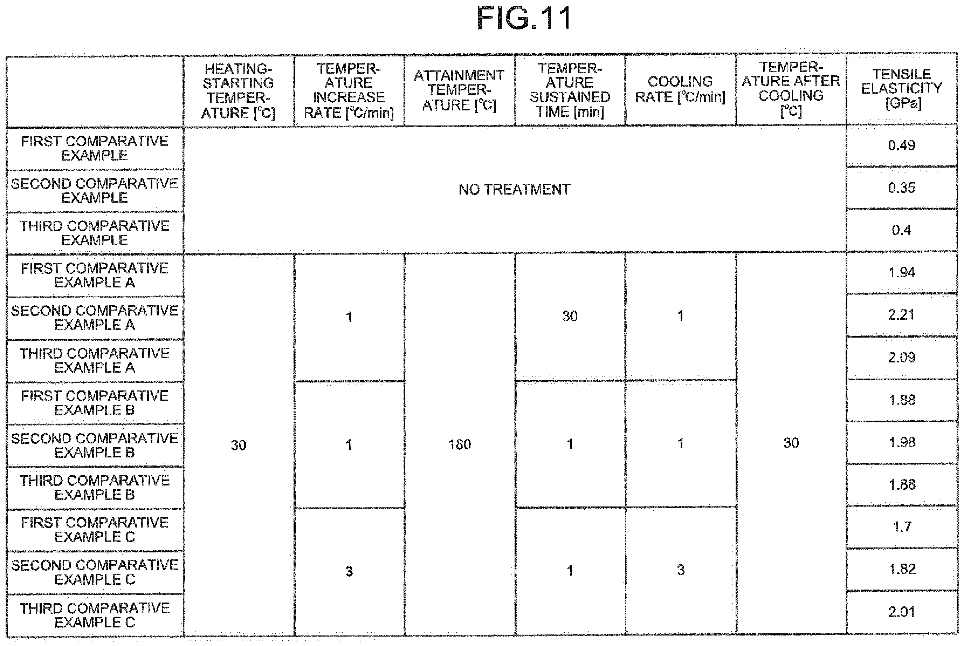

FIG. 11 is a schematic for explaining annealing conditions, and evaluation results of tensile elasticities of the resultant three-dimensional modeled objects.

### Samples of Three-Dimensional Modeled object MO

In the first example, a first example A, and a first example C illustrated in FIG. 11, the three-dimensional modeled object MO according to the first example illustrated in FIG. 7 was annealed under the annealing conditions described below.

In the second example, a second example A, and a second example C illustrated in FIG. 11, the three-dimensional modeled object MO according to the second example illustrated in FIG. 7 was annealed under the annealing conditions described below.

In the third example, a third example A, and a third example C illustrated in FIG. 11, the three-dimensional modeled object MO according to the third example illustrated in FIG. 7 was annealed under the annealing conditions described below.

The samples illustrated in FIG. 11 were provided with a dumbbell shape, in the same manner as that illustrated in FIG. 8B, and were used in evaluating the strength in the lamination direction. Because the samples of the three-dimensional modeled object MO achieved by performing the local heating and local cooling in FIG. 7 were those having gone through glass transition, the tensile elasticity in the crystallized condition, which is inherent to PEEK 381G, was not indicated in the tensile test.

### Annealing Conditions

In the first example 1 to the third example 3, the samples were not annealed at all. By contrast, the samples according to the first to the third examples A, the samples according to the first to the third examples B, and the samples according to the first to the third examples C were classified into these three groups, and each of these group was annealed under the same condition. The samples were annealed and crystallized by controlling the heated-air unit 122, the air intake port 123, and the exhaust port 124 in the annealing area 101B illustrated in FIG. 3. For all of the samples, the evaluations were carried out by setting the heating-starting temperature to 30 degrees Celsius, the highest attainment temperature to 180 degrees Celsius, and the temperature after the cooling to 30 degrees Celsius.

In the first to the third examples A, the temperature increase rate was set to 1 °C/min, the temperature sustained time was set to 30 minutes, and the cooling rate was set to 1 °C/min.

In the first to the third examples B, the temperature increase rate was set to 1 °C/min, the temperature sustained time was set to 1 minute, and the cooling rate was set to 1 °C/min.

In the first to the third examples C, the temperature increase rate was set to 3 °C/min, the temperature sustained time was set to 1 minute, and the cooling rate was set to 3 °C/min.

The highest attainment temperature for the annealing was set to 180 degrees Celsius. This temperature was set considering a temperature sufficiently exceeding the glass transition temperature of the modeling material, and at which the shape of the three-dimensional modeled object MO can be maintained.

### Evaluations of Tensile Elasticity

In the tensile elasticity evaluations, the tensile elasticities were calculated using the least-squares method within a load range of 10-20 N.

### Results of Tensile Elasticity Evaluations

The tensile elasticity achieved in the tensile test of the sample of the three-dimensional modeled object MO in the first example was 0.49 GPa. The tensile elasticity achieved in the tensile test of the sample of the three-dimensional modeled object MO in the second example was 0.35 GPa. The tensile elasticity achieved in the tensile test of the sample of the three-dimensional modeled object MO in the third example was 0.4 GPa. Because the samples were not annealed in the first to the third examples, the samples failed to exhibit a sufficient tensile elasticity.

By contrast, because the samples were annealed in the first example A to the third example 3C, the tensile elasticity was improved successfully. The samples exhibited tensile elasticities equal to or higher than 1.00 and equal to or lower than 2.50, and high levels of strength and durability was achieved, successfully.

In the first example A to the third example 3C, although the samples were annealed, no deformations were observed in the three-dimensional modeled objects MO.

As explained above, by annealing a three-dimensional modeled object having been applied with local heating and local cooling, warpage and deformation of a three-dimensional modeled object can be suppressed using a simple structure, and a high-quality three-dimensional modeled object can be achieved.

In particular, when a crystalline material (resin) or a semi-crystalline material (resin) is used as the modeling material, a high-quality three-dimensional modeled object can be manufactured.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. A modeling apparatus configured to laminate a modeling material to model a three-dimensional modeled object, the modeling apparatus comprising:
a local heating unit configured to locally heat the modeling material during lamination of the modeling material is being laminated;
a local cooling unit configured to locally cool the modeling material during the lamination; and
an annealing unit configured to anneal the resultant three-dimensional modeled object at a temperature equal to or higher than a predetermined temperature.

2. The modeling apparatus according to claim 1, wherein the predetermined temperature is set to a temperature equal to or higher than a glass transition temperature of the modeling material.

3. The modeling apparatus according to claim 1 or 2, further comprising:
a modeling area in which the lamination is performed to model the three-dimensional modeled object;
an annealing area in which the three-dimensional modeled object is annealed; and
a heat-insulating member thermally insulating the modeling area and the annealing area from each other.

4. The modeling apparatus according to claim 3, wherein
the modeling area and the annealing area are adjacent to each other via the heat-insulating member that is openable and closable, and
the modeling apparatus further comprises a conveying unit configured to convey a placement board on which the three-dimensional modeled object is placed, from the modeling area into the annealing area.

5. The modeling apparatus according to claim 4, wherein the annealing area is capable of housing a plurality of placement boards on which three-dimensional modeled objects are placed.

6. A method executed by a modeling apparatus configured to laminate a modeling material to model a three-dimensional modeled object, the method comprising:
locally heating the modeling material during lamination of the modeling material;
locally cooling the modeling material during the lamination; and
annealing the resultant three-dimensional modeled object at a temperature equal to or higher than a predetermined temperature.

7. A modeling system configured to laminate a modeling material to model a three-dimensional modeled object, the modeling system comprising:
a modeling apparatus configured to model the three-dimensional modeled object, the modeling apparatus including
a local heating unit configured to locally heat the modeling material during lamination of the modeling material, and
a local cooling unit configured to locally cool the modeling material during the lamination;
a conveyor apparatus configured to convey the three-dimensional modeled object; and
an annealing apparatus configured to anneal the three-dimensional modeled object conveyed from the modeling apparatus by the conveyor apparatus, at a temperature equal to or higher than a predetermined temperature.

8. An annealing apparatus configured to anneal a three-dimensional modeled object modeled by a modeling apparatus, the modeling apparatus including:
a local heating unit configured to locally heat a modeling material during lamination of the modeling material; and
a local cooling unit configured to locally cool the modeling material during the lamination,
the annealing apparatus comprising:
an annealing unit configured to anneal the three-dimensional modeled object at a temperature equal to or higher than a predetermined temperature.
